# EUROPEAN PATENT SPECIFICATION

(11) **EP 2 493 000 B1**
(45) Date of publication and mention of the grant of the patent: **07.10.2015**
(21) Application number: 11175873.6
(22) Date of filing: 28.07.2011
(51) Int. Cl.: H01M 8/24, H01M 8/04, H02J 1/00, H02J 1/10, H01M 8/02, H01M 8/12

(54) **Fuel cell stack**
Brennstoffzellenstapel
Empilement de piles à combustible

(30) Priority: 27.07.2011 US 201113192224; 24.02.2011 US 446394 P
(43) Date of publication of application: 29.08.2012
(73) Proprietor: Samsung SDI Co., Ltd., Yongin-si, Gyeonggi-do (KR)
(72) Inventor: Lee, Seung-Tae, Gyeonggi-do (KR); Kim, Jan-Dee, Gyeonggi-do (KR); Suh, Jun-Won, Gyeonggi-do (KR)
(74) Representative: Mounteney, Simon James

(56) References cited:
- EP-A1- 0 664 571
- EP-A1- 1 450 429
- EP-A1- 2 230 529
- JP-A- 3 008 266
- JP-A- 2000 058 079
- JP-A- 2002 260 706
- US-A- 6 099 986
- US-A1- 2004 081 866
- US-A1- 2004 185 319
- US-A1- 2007 188 147
- US-A1- 2008 213 643
- US-A1- 2009 011 309
- US-A1- 2010 209 802

## Description

### BACKGROUND

The present invention relates to a fuel cell stack.

Fuel cells are devices that convert the energy of fuel into electric energy, in which an anode and a cathode are disposed with an electrolyte therebetween. Hydrogen or a fuel gas containing hydrogen comes into contact with the anode (fuel electrode) and an oxide gas comes into contact with the cathode (air electrode), such that electricity is generated through the electrochemical reaction of the fuel gas and the oxide gas, which are ionized in the process described above. Heat is generated as a by-product of the reaction.

Fuel cell stacks are formed from a plurality of unit cells and they have optimum performance when the unit cells connected in series have the same voltage and current characteristic. However, when any one of the unit cells connected in series has defect and the current and voltage characteristics change, the performance of the entire stack decreases, such that the entire stack should be replaced, even if one unit cell has a problem.

A problem also arises if a short occurs in a unit fuel cell when connected in parallel with other unit cells. In such a case, the other unit cells can be overloaded, and this can cause serious damage to the overloaded cells, including explosion.

EP 0 664 571 A1 and US 2004/0185319 A1 disclose fuel cells connected in parallel with each cell being connected in series with a switch.

### SUMMARY OF THE INVENTION

The present invention has been made in an effort to provide a fuel cell stack that can prevent unit cells from being damaged and that can prevent or minimize decrease in performance of the entire fuel cell stack, even if defect occurs in a cell or an electric short is generated in the fuel cell stack, such as during assembly of the stack.

A fuel cell stack according to a first aspect of the invention includes the features of Claim 1. Preferred features of this aspect of the invention are set out in claims 2 to 13.

According to the present invention, it is therefore possible to prevent a fuel cell stack from being damaged and its performance from considerably decreasing, even if the performance of a unit cell decreases (or abnormally increases) or an electric short occurs in the fuel cell stack.

### BRIEF DESCRIPTION OF THE DRAWINGS

FIG. 1 is a perspective view showing a unit cell 100 for use in a fuel cell stack according to the present invention.
FIG. 2A is a schematic view showing when unit cells are connected in series.
FIG. 2B is a schematic view showing when unit cells are connected in parallel.
FIG. 2C is a schematic view showing when unit cells are connected in a series-parallel mixed type.
FIG. 3A is a circuit diagram showing when unit cells are connected in series.
FIG. 3B is a circuit diagram showing when unit cells are connected in parallel.
FIG. 4A is a circuit diagram showing a fuel cell stack in series connection.
FIG. 4B is a schematic view showing the fuel cell stack of FIG. 4A.
FIG. 5A is a circuit diagram showing a fuel cell stack in parallel connection.
FIG. 5B is a schematic view showing the fuel cell stack of FIG. 5A.
FIGS. 6A to 6C are schematic views showing a fuel cell stack according to an embodiment of the present invention in a series-parallel mixed type.

### DETAILED DESCRIPTION

Hereinafter, embodiments of the present invention and comparative examples will be described with reference to the accompanying drawings. The terms representing directions used herein are considered to be based on the status shown in the drawings, if not specifically defined or stated. Further, the same reference numerals represent the same parts throughout the embodiments.

Typical fuel cells are composed of a fuel converter (reformer and reactor) reforming and supplying fuel, and a fuel cell module. The fuel cell module typically includes an assembly comprising a fuel cell stack that converts chemical energy into electric energy and thermal energy via an electrochemical method. That is, a fuel cell module generally includes: a fuel cell stack; a pipe system through which fuel, oxides, cooling water, and waste matters move; a wire that transmits electricity produced by the stack; a part for controlling or monitoring the stack, and a part that takes a measurement for identifying a problem in the stack.

The present invention relates to a fuel cell stack having an electric connection structure between unit cells which makes it possible to achieve stable performance, even under disconnection or short in a specific part.

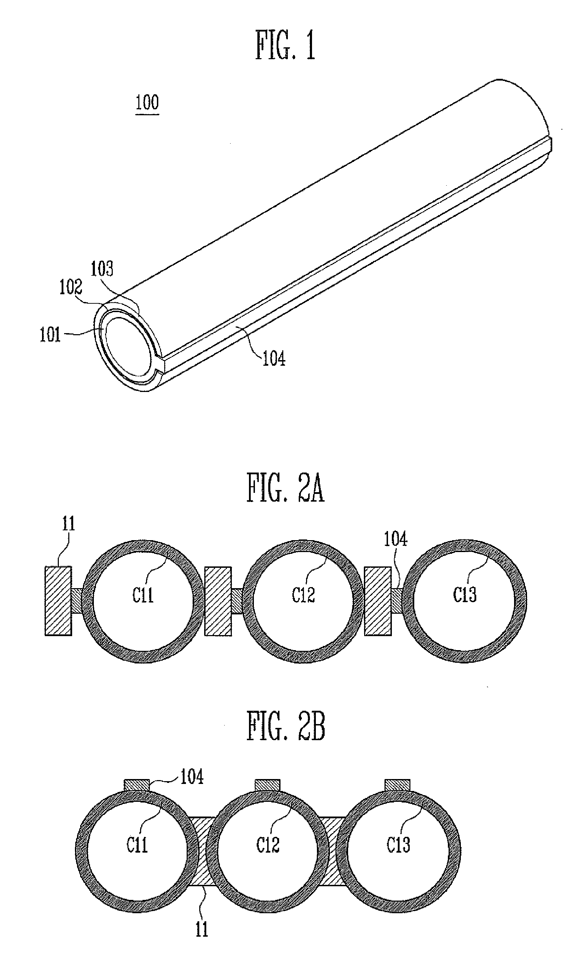

A unit cell 100 is described with reference to FIG. 1. The unit cell 100 is supplied with reformed fuel from a fuel converter (not shown) and produces electricity, using an oxidation reaction. The unit cell 100 is tube-shaped, as shown in FIG. 1. A first electrode layer 101, an electrolyte 102, and a second electrode layer 103 are radially stacked from the center axis. An interconnector 104 is formed longitudinally on the outer circumferential surface of the first electrode layer 101. The interconnector 104 electrically connects the first electrode layer 101 with an external circuit. The electrolyte 102 is formed where the interconnector 104 is not formed, on the outer circumferential surface of the first electrode layer 101. Further, the second electrode layer 103 is on the outer circumferential surface of the electrolyte 102. In this structure, the second electrode layer 103 and the interconnector 104 are spatially separated or electrically insulated by an insulator therebetween.

The unit cell 100 can be formed as an anode-supported type or a cathode-supported type, as necessary. The invention is not limited to either type. That is, the first electrode layer 101 may be a fuel electrode (anode) or an air electrode (cathode).

The air electrode is made of a pure electronic conductor or a mixed conductor, which has high ion conductivity and electronic conductivity, such as LaMnO₃-based or LaCoO₃-based substances, is stable in an oxidation atmosphere, and does not make a chemical reaction with the electrolyte, which is described below. The electrolyte is a part that functions of a channel for oxygen ions generated from the air electrode or hydrogen ions generated from the fuel electrode. The electrolyte is made of a ceramic material that is dense such that air cannot permeate. Yttria-stabilized zirconia (hereafter, referred to as "YSZ") in which a small amount of Y₂O₃ is added in ZrO₂ is generally used for the material of the electrolyte. The fuel electrode is a part where a hydrogen gas, which is the fuel for the fuel cell, is supplied. Further, the fuel electrode is basically made of a ceramic material, such as the YSZ described above. In particular, it is preferable to use a metal ceramic cermet, such as NiO-8YSZ or Ni-8YSZ, which is cheap and stable under a high-temperature reduction atmosphere.

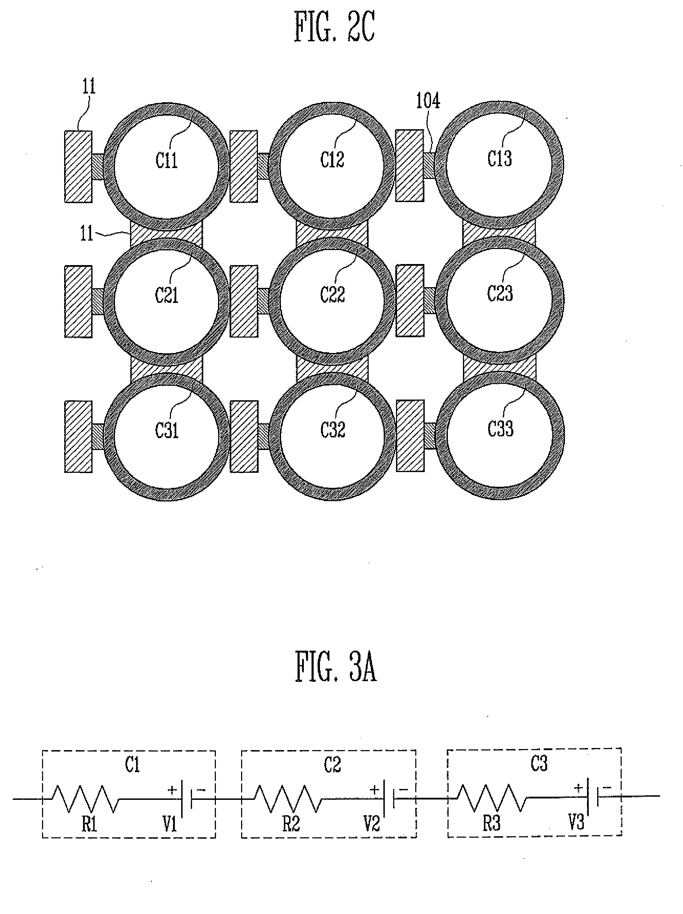

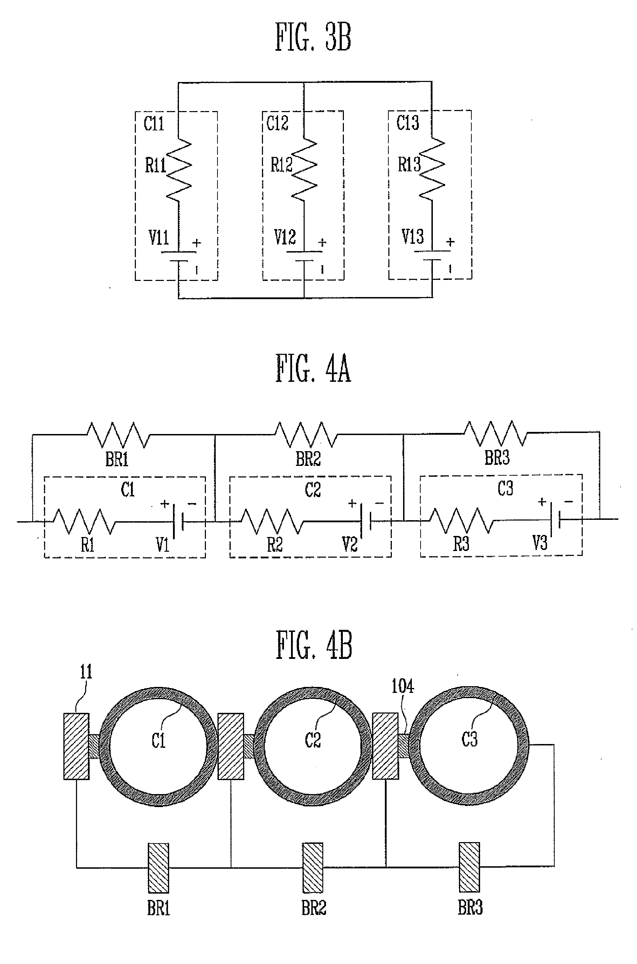

Ways of connecting unit cells are described with reference to FIGS. 2A to 3B. FIG. 2A is a schematic view showing when unit cells are connected in series, FIG. 2B is a schematic view showing when unit cells are connected in parallel, and FIG. 2C is a schematic view showing when unit cells are connected in a series-parallel mixed arrangement. Further, FIG. 3A is a circuit diagram showing when unit cells are connected in series and FIG. 3B is a circuit diagram showing when unit cells are connected in parallel.

When unit cells are connected in series, the interconnectors of the unit cells are in contact with the outer circumferential surfaces of the other unit cells, or as shown in FIG. 2A, current collectors 11 are disposed between the interconnectors 104 of the unit cells C1, C2, and C3 and the outer circumferential surfaces of the other unit cells C1, C2, and C3, for electric connection.

When the unit cells are connected in parallel, the outer circumferential surfaces of the unit cells are in contact with each other, or as shown in FIG. 2B, current collectors 11 are disposed between the outer circumferential surfaces of the unit cells C11, C12, and C13.

When the unit cells are connected in a series-parallel mixed type, the types for the series connection and the parallel connection are mixed for the connection. That is, for the unit cells C11 and C12 etc., which are connected in series, as shown in FIG. 2C, the interconnectors 104 of the unit cells C12, C22, and C32 and the outer circumferential surfaces of the other unit cells C11, C21, and C31 are electrically connected directly or by the current collectors 11, while for the unit cells C11 and C12 etc., which are connected in parallel, the outer circumferential surfaces of the unit cells are electrically connected directly or by the electricity connectors 11. A fuel cell stack or bundle is achieved in this way.

The unit cells that are connected in series and in parallel are briefly shown in circuit diagrams in FIGS. 3A and 3B. That is, the open circuit voltage (OCV) of the unit cells C1, C2, C3, C11, C12, and C13 can be expressed by voltage sources V1, V2, V3, V11, V12, and V13, or may be expressed by one internal resistor R1, R2, R3, R11, R12, and R13, by adding all of resistance between the electrolyte and the electrodes, the resistance of the electrodes themselves, the current collectors, the interconnectors, and various contact resistances.

When the performance of any one of the unit cells in the fuel cell stack decreases and the internal resistance abnormally increases or a unit cell with an electric short is inserted, the performance of the entire fuel cell stack may greatly decrease or a malfunction may be caused. Fuel cell stacks according to the present invention seek to overcome these problems and embodiments of such stacks are described hereafter.

### Comparative Example 1

A fuel cell stack is described below with reference to FIGS. 4A and 4B.

Unit cells C1, C2, and C3 in the fuel cell stack are connected in series to form a fuel cell group. Current collectors 11 are disposed between the unit cells C1, C2, and C3. Meanwhile, bypass resistors BR1, BR2, and BR3 are connected in parallel to the unit cells C1, C2, and C3.

When the performance of any one unit cell decreases and the internal resistance abnormally increases, current flows through the bypass resistor connected in parallel to the unit cell with decreased performance. Therefore, a specific problem does not occur even if the performance of a unit cell decreases.

Meanwhile, in the fuel cell stack of this example, when an electric short is generated in any one unit cell the resistance of that unit cell becomes close to zero. The effect of this is similar to if the unit cell did not exist, and accordingly, a specific problem is not caused in the entire fuel cell stack.

An activation polarization section, an ohmic polarization section, and a concentration polarization section may be divided in accordance with a section where the unit cell voltage changes to current density. The activation polarization section is a region with low current density and usually influenced by the micro structure of a catalyst and a cell, a reaction of the material and the substance. The ohmic polarization section is a section that is usually influenced by resistance between the electrolyte and the electrodes, the resistance of the electrodes themselves, the current collectors, the interconnectors, and various contact resistances, and is used when a solid oxide fuel cell stack operates. The concentration polarization section is a section where loss due to mass transport increases and the voltage rapidly drops.

The bypass resistors may have the resistance of the ohmic polarization section of the unit cells, or may have resistance higher than the sum of the resistance of the ohmic polarization section of the unit cells and the resistance of the corresponding current collectors, when the current collectors are in between the unit cells. However, since the resistance of the current collectors is generally large enough to neglect the resistance of the ohmic polarization section, it is possible to set the resistance of the corresponding current collectors to as a lower limit, when the current collectors are in between the unit cells. Meanwhile, the resistance of the ohmic polarization section implies resistance (the real number of impedance) which is measured when the unit cells are measured by an impedance analyzer.

Further, when the resistance of the bypass resistors is three times or more the sum of the resistance of the ohmic polarization section of the unit cells and the resistance of the current collectors in a stack composed of at least two unit cells connected in series, the performance of the stack can decrease to half or less. Therefore, it is preferable to set upper limit of the resistance of the bypass resistors to have a value that is three times the sum of the resistance of the ohmic polarization section of the unit cells and the resistance of the current collectors.

Current has a characteristic that most of the current flows to the element with smaller resistance, in two elements connected in parallel. Therefore, when a resistor having resistance above the resistance of the ohmic polarization section of the unit cell is used as the bypass resistor, current will flow to the corresponding unit cell when the performance of the unit cell is normal, but the current will flow through a bypass resistor having smaller resistance when the performance of the unit cells decreases and the resistance abnormally increases, such that it is possible to somewhat prevent overload applied to the unit cell with the performance decreased.

### Comparative Example 2

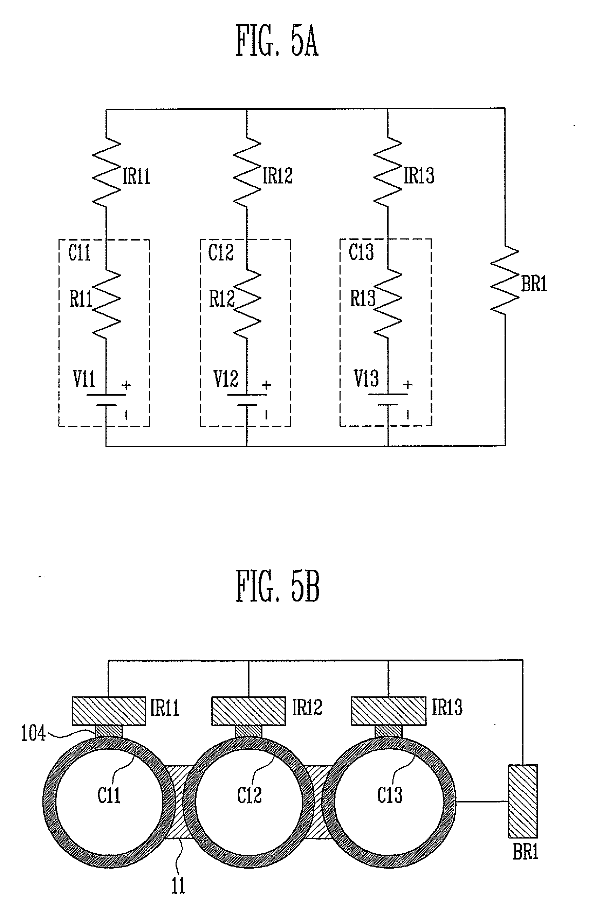

A fuel cell stack according to a second Comparative Example is described with reference to FIGS. 5A and 5B.

Unit cells C11, C12, and C13 in the fuel cell stack of the embodiment are connected in parallel to form a fuel cell group. Current collectors 11 are disposed between the unit cells C11, C12, and C13. Connective resistors IR11, IR12, and IR13 are connected in series to the unit cells C11, C12, and C13. A bypass resistor BR1 is connected in parallel to the unit cells C11, C12, and C13 and the connective resistors IR11, IR12, and IR13.

The bypass resistor BR1 has the same function and operation as those of the bypass resistors described in connection with Comparative Example 1. The detailed description of the bypass resistor is not provided.

The connective resistors IR11, IR12, and IR13 are disconnected by heat due to resistance at a small current value in comparison to the current collector 11. In order to achieve such a function, the connective resistors IR11, IR12, and IR13 may be made of a material having a melting point smaller than the current collector 11 or may be formed to have a resistance characteristic higher than the current collector 11. Further, in terms of the structure, the connective resistors IR11, IR12, and IR13 may be formed to be longer than the current collector 11 or formed to have a cross-section that is smaller than the current collector 11. This is because the resistance of a wire is proportionate to the length of the wire and is in inverse proportion to the cross-sectional area.

Meanwhile, because the connective resistors should have a not too high melting point and a relatively not small electric conductivity and should not have large influence on the performance of the fuel cell stack, they may be preferably made of single metal or an alloy which contains at least any one of Au, Ag, Pt, Ni, Cu, Fe, Cr, Mn, and Ti.

When the performance of any one of unit cells decreases and the resistance abnormally increases in the fuel cell stack of this example, only the current flowing to the unit cell decreases, such that the other cells are not largely influenced.

In fuel cell stacks, when electric short occurs in any one of unit cells, the other unit cells generally make the maximum output that the unit cells can make, regardless of the predetermined current value, which causes a serious problem, such as damage to the whole unit cells.

However, in the fuel cell stack according to this example, the connective resistors IR11, IR12, and IR13 are disconnected before the unit cells are damaged, even if the output of the unit cells increases, such that current flow is stopped and the unit cells are not damaged. Even if all the connective resistors IR11, IR12, and IR13 are disconnected, current flows through the bypass resistor BR1, such that the entire system is not largely influenced.

### Embodiment 1

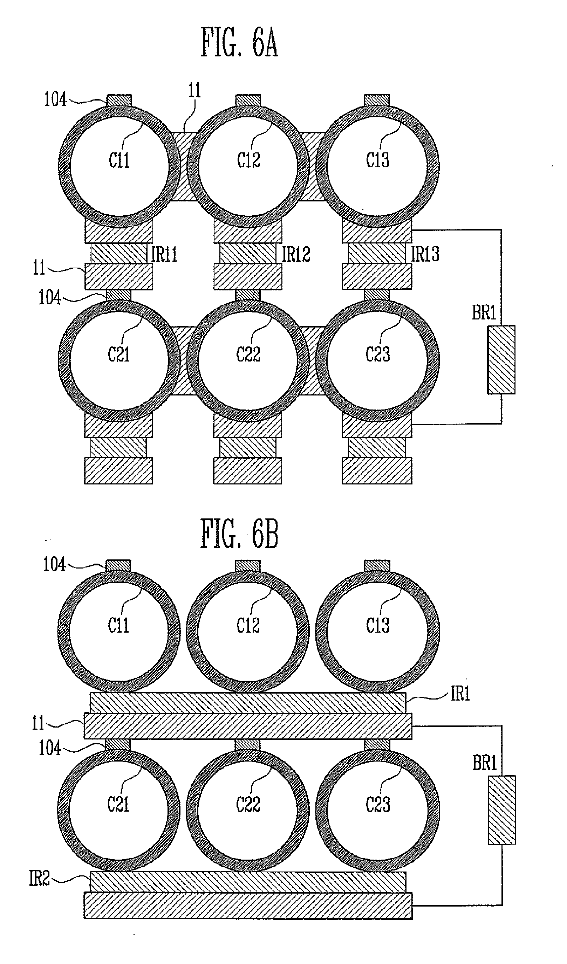

A fuel stack according to a first embodiment of the present invention is described with reference to FIG. 6A.

Referring to FIG. 6A first, in a fuel cell stack in series-parallel mixed connection, the bypass resistors and the connective resistors described above in Comparative Example 1 and Comparative Example 2 are all used.

Assuming that unit cells C21, C22, and C23 connected in parallel make one group, a bypass resistor BR1 is connected in parallel to the group. Further, current collectors 11 being in contact with the unit cells and connective resistors IR11, IR12, and IR13 interposed between two current collectors 11 are disposed between the unit cells C11, C12, and C13, which are connected in series to form a second group.

In this case, as described in Comparative Example 2, when the performance of any one cell decreases, current flows through another cell or the bypass resistor BR1, and when electric short occurs, the connective resistor IR11, IR12, and IR13 for the unit cell of which the output rapidly increases is disconnected, such that a problem, such as damage, can be reduced.

### Embodiments 2 and 3

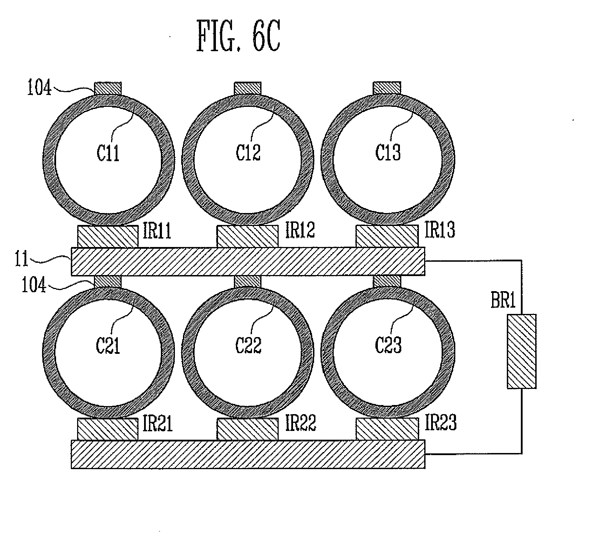

The embodiment shown in FIG. 6B has a difference in that the current collector 11 and the connective resistor IR1 extend and supplement electric connection between the unit cells connected in parallel. In the case shown in FIG. 6C, only the current collector 11 extends and supplements electric connection between the unit cells connected in parallel.

In each of the embodiments shown in FIGS. 6A to 6C, the entire fuel cell stack is prevented from being decreased in performance and damaged, by the operation of the bypass resistors and the connective resistors, even if the performance of any one of the unit cells decreases or electric short occurs in any one of the unit cells.

Although preferred embodiments of the present invention have been described above, the scope of the present invention is not limited to the preferred embodiments and can be implemented by a variety of fuel cell stacks, without departing from the scope of the present invention described in claims.

## Claims

1. A fuel cell stack comprising a unit cell group, wherein the unit cell group includes:
a plurality of unit cells (C11, C12, C13) connected in parallel; and
at least one connective resistor (IR11, IR12, IR13);
wherein a respective said connective resistor is connected in series with at least one of the said unit cells, **characterised in that** the connective resistor is configured to melt to interrupt a current path in which the unit cell is located, if an electrical short occurs; and
**in that** the unit cell group further comprises a bypass resistor (BR1) connected in parallel with the said unit cells for providing a current path that bypasses the group of unit cells (C11, C12, C13);
and **in that** the fuel cell stack comprises a plurality of said unit cell groups (C11, C12, C13, C21, C22, C23), the said unit cell groups being connected together in series.

2. A fuel cell stack according to Claim 1, wherein each unit cell group comprises a plurality of said connective resistors (IR11, IR12, IR13); and a respective said connective resistor is connected in series with each of the said unit cells for interrupting a current path in which that unit cell is located.

3. A fuel cell stack according to Claim 1 or 2, wherein the or each connective resistor (IR11, IR12, IR13) is heat sensitive.

4. A fuel cell stack according to any one of the preceding Claims, wherein a current collector (11) is connected between each pair of adjacent cells (C11, C12, C13).

5. A fuel cell stack according to Claim 4, wherein the or each said connective resistor (IR11, IR12, IR13) has a resistance that is higher than that of a respective said current collector (11).

6. A fuel cell stack according to Claim 4 or 5, wherein the or each said connective resistor (IR11, IR12, IR13) comprises a material having a lower melting point than that of a respective said current collector (11).

7. A fuel cell stack according to any one of Claims 4 to 6, wherein the or each said connective resistor (IR11, IR12, IR13) is longer than a respective said current collector (11).

8. A fuel cell stack according to any one of Claims 4 to 7, wherein the or each said connective resistor (IR11, IR12, IR13) has a smaller cross section than a respective said current collector (11).

9. A fuel cell stack according to any one of the preceding Claims, wherein the or each connective resistor (IR11, IR12, IR13) comprises at least one of Au, Ag, Pt, Ni, Cu, Fe, Cr, Mn, Ti or an alloy thereof.

10. A fuel cell stack according to any one of the preceding claims, wherein individual unit cells in adjacent unit cell groups are connected together via respective said connective resistors (IR11, IR12, IR13).

11. A fuel cell stack according to any one of claims 1 to 9, wherein the unit cells (C11, C12, C13, C21, C22, C23) in adjacent unit cell groups are connected together via a common said connective resistor.

12. A fuel cell stack according to any one of the preceding claims, wherein the unit cells in (C11, C12, C13, C21, C22, C23) adjacent unit cell groups are connected together via a common said current collector (11).

13. A fuel cell stack according to any one of claims 1 to 10, wherein individual unit cells (C11, C12, C13, C21, C22, C23) in adjacent unit cell groups are connected together via respective said current collectors (11).

## Patentansprüche

1. Brennstoffzellenstapel, der eine Einheitszellengruppe aufweist, wobei die Einheitszellengruppe umfasst:
eine Vielzahl von Einheitszellen (C11, C12, C13), die parallel geschaltet sind; und
mindestens einen verbindenden Widerstand (IR11, IR12, IR13);
wobei ein entsprechender verbindender Widerstand mit mindestens einer der Einheitszellen in Reihe geschaltet ist, **dadurch gekennzeichnet, dass** der verbindende Widerstand so ausgebildet ist, dass er schmilzt, um einen Strompfad zu unterbrechen, in dem die Einheitszelle angeordnet ist, wenn ein elektrischer Kurzschluss auftritt; und
dadurch, dass die Einheitszellengruppe außerdem einen Überbrückungswiderstand (BR1) aufweist, der parallel mit den Einheitszellen geschaltet ist, um einen Strompfad bereitzustellen, der die Gruppe von Einheitszellen (C11, C12, C13) überbrückt;
und dadurch, dass der Brennstoffzellenstapel eine Vielzahl von Einheitszellengruppen (C11, C12, C13, C21, C22, C23) aufweist, wobei die Einheitszellengruppen miteinander in Reihe geschaltet sind.

2. Brennstoffzellenstapel nach Anspruch 1, bei dem eine jede Einheitszellengruppe eine Vielzahl von verbindenden Widerständen (IR11, IR12, IR13) aufweist; und wobei ein entsprechender verbindender Widerstand in Reihe mit einer jeden der Einheitszellen geschaltet ist, um einen Strompfad zu unterbrechen, in dem die Einheitszelle angeordnet ist.

3. Brennstoffzellenstapel nach Anspruch 1 oder 2, bei dem der oder jeder verbindende Widerstand (IR11, IR12, IR13) wärmeempfindlich ist.

4. Brennstoffzellenstapel nach einem der vorhergehenden Ansprüche, bei dem ein Stromabnehmer (11) zwischen einem jeden Paar von benachbarten Zellen (C11, C12, C13) geschaltet ist.

5. Brennstoffzellenstapel nach Anspruch 4, bei dem der oder jeder verbindende Widerstand (IR11, IR12, IR13) einen Widerstand aufweist, der höher ist als der eines entsprechenden Stromabnehmers (11).

6. Brennstoffzellenstapel nach Anspruch 4 oder 5, bei dem der oder jeder verbindende Widerstand (IR11, IR12, IR13) ein Material mit einem niedrigeren Schmelzpunkt aufweist als der eines entsprechenden Stromabnehmers (11).

7. Brennstoffzellenstapel nach einem der Ansprüche 4 bis 6, bei dem der oder jeder verbindende Widerstand (IR11, IR12, IR13) länger ist als ein entsprechender Stromabnehmer (11).

8. Brennstoffzellenstapel nach einem der Ansprüche 4 bis 7, bei dem der oder jeder verbindende Widerstand (IR11, IR12, IR13) einen kleineren Querschnitt aufweist als ein entsprechender Stromabnehmer (11).

9. Brennstoffzellenstapel nach einem der vorhergehenden Ansprüche, bei dem der oder jeder verbindende Widerstand (IR11, IR12, IR13) mindestens eines von Au, Ag, Pt, Ni, Cu, Fe, Cr, Mn, Ti oder einer Legierung davon aufweist.

10. Brennstoffzellenstapel nach einem der vorhergehenden Ansprüche, bei dem die einzelnen Einheitszellen in benachbarten Einheitszellengruppen miteinander mittels entsprechender verbindender Widerstände (IR11, IR12, IR13) verbunden sind.

11. Brennstoffzellenstapel nach einem der Ansprüche 1 bis 9, bei dem die Einheitszellen (C11, C12, C13, C21, C22, C23) in benachbarten Einheitszellengruppen miteinander mittels des gemeinsamen verbindenden Widerstandes verbunden sind.

12. Brennstoffzellenstapel nach einem der vorhergehenden Ansprüche, bei dem die Einheitszellen (C11, C12, C13, C21, C22, C23) in benachbarten Einheitszellengruppen miteinander mittels des gemeinsamen Stromabnehmers (11) verbunden sind.

13. Brennstoffzellenstapel nach einem der Ansprüche 1 bis 10, bei dem die einzelnen Einheitszellen (C11, C12, C13, C21, C22, C23) in benachbarten Einheitszellengruppen miteinander mittels entsprechender Stromabnehmer (11) verbunden sind.

## Revendications

1. Empilement de piles à combustible comprenant un groupe de piles unitaires, le groupe de piles unitaires comprenant :
une pluralité de piles unitaires (C11, C12, C13) connectées en parallèle ; et
au moins une résistance de connexion (IR11, IR12, IR13) ;
dans lequel ladite résistance de connexion respective est connectée en série avec au moins une desdites piles unitaires, **caractérisé en ce que** la résistance de connexion est configurée pour fondre de manière à interrompre un trajet de courant dans lequel la pile unitaire est située, si un court-circuit électrique se produit ; et
**en ce que** le groupe de piles unitaires comprend en outre une résistance de dérivation (BR1) connectée en parallèle auxdites piles unitaires pour produire un trajet de courant qui dérive le groupe de piles unitaires (C11, C12, C13) ;
et **en ce que** l'empilement de piles à combustible comprend une pluralité desdits groupes de piles unitaires (C11, C12, C13, C21, C22, C23), lesdits groupes de piles unitaires étant mutuellement connectés en série.

2. Empilement de piles à combustible selon la revendication 1, dans lequel chaque groupe de piles unitaires comprend une pluralité desdites résistances de connexion (IR11, IR12, IR13) ; et ladite résistance de connexion respective est connectée en série avec chacune desdites piles unitaires pour interrompre un trajet de courant dans lequel cette pile unitaire est située.

3. Empilement de piles à combustible selon la revendication 1 ou 2, dans lequel la ou chaque résistance de connexion (IR11, IR12, IR13) est thermosensible.

4. Empilement de piles à combustible selon l'une quelconque des revendications précédentes, dans lequel un collecteur de courant (11) est connecté entre chaque paire de cellules adjacentes (C11, C12, C13).

5. Empilement de piles à combustible selon la revendication 4, dans lequel ladite ou chaque résistance de connexion (IR11, IR12, IR13) a une résistance qui est supérieure à celle dudit collecteur de courant respectif (11).

6. Empilement de piles à combustible selon la revendication 4 ou 5, dans lequel ladite ou chaque résistance de connexion (IR11, IR12, IR13) comprend un matériau ayant un point de fusion inférieur à celui dudit collecteur de courant respectif (11).

7. Empilement de piles à combustible selon l'une quelconque des revendications 4 à 6, dans lequel ladite ou chaque résistance de connexion (IR11, IR12, IR13) est plus longue que ledit collecteur de courant respectif (11).

8. Empilement de piles à combustible selon l'une quelconque des revendications 4 à 7, dans lequel chaque ou ladite résistance de connexion (IR11, IR12, IR13) a une section transversale plus petite que ledit collecteur de courant respectif (11).

9. Empilement de piles à combustible selon l'une quelconque des revendications précédentes, dans lequel la ou chaque résistance de connexion (IR11, IR12, IR13) comprend au moins l'un de Au, Ag, Pt, Ni, Cu, Fe, Cr, Mn, Ti ou un alliage de celui-ci.

10. Empilement de piles à combustible selon l'une quelconque des revendications précédentes, dans lequel les piles unitaires individuelles dans des groupes de piles unitaires adjacents sont mutuellement connectées par l'intermédiaire desdites résistances de connexion respectives (IR11, IR12, IR13).

11. Empilement de piles à combustible selon l'une quelconque des revendications 1 à 9, dans lequel les piles unitaires (C11, C12, C13, C21, C22, C23) dans des groupes de piles unitaires adjacents sont mutuellement connectées par l'intermédiaire de ladite résistance de connexion commune.

12. Empilement de piles à combustible selon l'une quelconque des revendications précédentes, dans lequel les piles unitaires (C11, C12, C13, C21, C22, C23) dans des groupes de piles unitaires adjacents sont mutuellement connectées par l'intermédiaire dudit collecteur de courant commun (11).

13. Empilement de piles à combustible selon l'une quelconque des revendications 1 à 10, dans lequel les piles unitaires individuelles (C11, C12, C13, C21, C22, C23) dans des groupes de piles unitaires adjacents sont mutuellement connectées par l'intermédiaire desdits collecteurs de courant respectifs (11).
